# EUROPÄISCHE PATENTSCHRIFT

(11) **EP 0 388 520 B1**
(45) Veröffentlichungstag und Bekanntmachung des Hinweises auf die Patenterteilung: **28.04.1993**
(21) Anmeldenummer: 89121198.9
(22) Anmeldetag: 16.11.1989
(51) Int. Cl.: F16F 13/00

(54) **Hülsengummifeder**
Rubber bushing
Manchon de caoutchouc

(30) Priorität: 23.03.1989 DE 3909609
(43) Veröffentlichungstag der Anmeldung: 26.09.1990
(73) Patentinhaber: Firma Carl Freudenberg, 69469 Weinheim (DE)
(72) Erfinder: Schwerdt, Hans-Werner, D-6947 Laudenbach (DE)

(56) Entgegenhaltungen:
- EP-A- 0 009 120
- EP-A- 0 242 254
- FR-A- 2 555 688

## Beschreibung

Die Erfindung betrifft eine Hülsengummifeder nach dem Oberbegriff von Anspruch 1.

Eine solche Hülsengummifeder ist aus der EP-A-0 242 254 bekannt. Danach ist bereits eine Hülsengummifeder bekannt, bei der rotationssymmetrisch gestaltete Zusatzfeden im Sinne von Endanschlägen zur Anwendung gelangen. Die elastischen Eigenschaften im Hinblick auf besondere Erfordernisse des Verwendungsfalles können unter normalen Betriebsbedingungen nicht verändert und an die jeweiligen Gegebenheiten in gezielter Weise angepaßt werden. Ferner ist die Herstellbarkeit der Hülsengummifeder vergleichsweise kompliziert, wodurch sich eine wenig befriedigende Wirtschaftlichkeit ergibt.

Eine ähnliche Ausführung, wobei das Innen- und das Außenrohr allerdings nur durch einen einzigen Federkörper radialelastisch aufeinander abgestützt sind, ist aus der EP-A- 0 009 120 bekannt. Durch diese Ausgestaltung ist die elastische Tragfähigkeit in bestimmter Weise definiert. Eine solche Hülsengummifeder läßt sich dadurch nur für einen ganz bestimmten Verwendungsfall in optimaler Weise einsetzen. Abweichungen von der ursprünglich vorgesehenen Belastung haben daher stets eine Beeinträchtigung der während der bestimmungsgemäßen Verwendung erzielten Dämpfungs- und Isoliereigenschaften zur Folge.

Der Erfindung liegt die Aufgabe zugrunde, eine Hülsengummifeder der eingangs genannten Art derart weiterzuentwickeln, daß sie speziellen Erfordernissen des Anwendungsfalles, insbesondere hinsichtlich der auftretenden Belastungen, besser gerecht wird und gleichzeitig einfacher herstellbar ist.

Diese Aufgabe wird erfindungsgemäß bei einer Hülsengummifeder der eingangs genannten Art dadurch gelöst, daß der zweite Federkörper in zwei Radialebenen, die einander senkrecht zugeordnet sind, verschieden nachgiebig gestaltet ist. Dadurch wird er speziellen Erfordernissen des Anwendungsfalles besser gerecht. Ein solcher Fall ist beispielsweise bei der Lagerung eines Verbrennungsmotors in einem Kraftfahrzeug gegeben. Beispielsweise in Längsrichtung bedarf hier der Motor einer wesentlich strafferen Führung als in vertikaler Richtung. Der zweite Federkörper kann demgemäß gestaltet sein und das Außenrohr im unbelasteten Zustand nur im Bereich von zwei in der Belastungsrichtung einander gegenüberliegenden Berührungsstellen berühren.

Akustisch wirksame, hochfrequente Schwingungen werden hierdurch in ausgezeichneter Weise isoliert, wobei es von hervorzuhebender Bedeutung ist, daß die sich bei einer Einfederung der erfindungsgemäßen Hülsengummifeder in den flüssigkeitsgefüllten Kammern des ersten Federkörpers ergebenden Drucksteigerungen im Bereich des zweiten Federkörpers nicht auszuwirken vermögen und die Entstehung von elastischen Vorspannungen in denselben nicht zu bewirken vermögen.

Die elastischen Tragfähigkeiten des ersten und des zweiten Federkörpers können in nahezu beliebiger Weise miteinander abgestimmt werden. Bevorzugt gelangen Abstimmungen zur Anwendung, in denen der erste Federkörper während der bestimmungsgemäßen Verwendung weniger als 50 % der insgesamt zu tragenden Last aufnimmt. Die Ausbauchungselastizität der in ihm enthaltenen, flüssigkeitsgefüllten Kammern muß jedoch hinreichend groß sein, um beim Auftreten großer Relativverlagerungen des Innenrohres in bezug auf das Außenrohr eine Durchpressung von Flüssigkeitsbestandteilen unter Erzielung einer Dämpfungswirkung in der Dämpfungsöffnung zu gewährleisten. Die diesbezüglich einzuhaltenden Randbedingungen sind im Fachgebiet bekannt.

Der zweite Federkörper ist nachträglich montierbar und zweckmäßig reibschlüssig mit dem Innen- und/oder Außenrohr verbunden. Er bildet hierdurch im Anschluß an seine Montage zusammen mit den übrigen Bestandteilen der erfindungsgemäßen Hülsengummifeder eine in sich geschlossene Baueinheit.

Das Innen- und das Außenrohr sind bei der erfindungsgemäßen Hülsengummifeder auf ihrer gesamten Länge unnachgiebig gestaltet.

Um hierbei eine ausgeglichene Tragfähigkeit auf der geamten Länge zu erhalten, hat es sich als vorteilhaft bewährt, wenn der zweite Federkörper zwei Teilkörper umfaßt, die spiegelbildlich gestaltet und dem ersten Federkörper zugeordnet sind.

Bei Ausführungen, bei denen der zweite Federkörper reibschlüssig mit dem Innenrohr verbunden ist, hat es sich im Hinblick auf die Gewährleistung einer ausreichenden Betriebssicherheit als vorteilhaft bewährt, wenn der zweite Federkörper am Außenumfang einer metallischen Stützhülse adhäsiv befestigt und durch die Stützhülse reibschlüssig mit dem Innenrohr verbunden ist. Die dabei zum Tragen kommende, adhäsive Verbindung zwischen dem zweiten Federkörper und der Stützhülse läßt sich durch unmittelbares Anvulkanisieren erzeugen. Die metallische Ausbildung der Stützhülse gewährleistet in Verbindung mit der Unnachgiebigkeit des Innenrohres über lange Zeiträume einen festen Sitz des zweiten Federkörpers.

Die Anbringung von senkrecht übereinanderliegenden Querschnittsschwächungen und gegebenenfalls von Durchbrechungen in dem zweiten Federkörper ist ebenfalls möglich.

Eine beispielhafte Ausführung der erfindungsgemäßen Hülsengummifeder ist in der in der Anlage beigefügten Zeichnung dargestellt. Sie wird nachfolgend näher erläutert. Es zeigen:
- Figur 1: die Hülsengummifeder in quergeschnittener Darstellung
- Figur 2: die Hülsengummifeder in längsgeschnittener Darstellung
- Figur 3: die Hülsengummifeder in der Seitenansicht.

Die gezeigte Hülsengummifeder umfaßt ein Innen- und ein Außenrohr 1, 2, die durch einen ersten Federkörper 3 aus Gummi radialelastisch aufeinander abgestützt sind. Das Innen- und das Außenrohr bestehen aus metallischem Werkstoff. Sie sind durch unmittelbares Anvulkanisieren des den Federkörper bildenden Werkstoffes mit dem Federkörper verbunden.

Das Außenrohr 2 ist zweischalig aufgebaut und umfaßt die äußere, flüssigkeitsdicht in sich geschlossene Stützhülse 2.1 und das darin gelagerte Fensterrohr 2.2. Die Wandung des letzteren ist im Bereich der Zwischenräume der Stege 3.1 des ersten Federkörpers 3 von radialen Durchbrechungen durchdrungen und wird stirnseitig von der Stützhülse 2.1 mit in radialer Richtung nach innen vorspringenden, umlaufenden Flanschen umgriffen. Die Flansche umschließen gemeinsam mit komplementär gestalteten Einbördelungen des Fensterrohres 2.2 umlaufende Kanäle 8.1, die durch Übertrittsöffnungen die jeweils einander gegenüberliegenden Kammern 4, 5 und 6, 7 paarweise verbinden und die Funktion von Dämpfungsöffnungen haben.

Sie sind ebenso wie die Kammern vollständig mit einer hydraulischen Flüssigkeit gefüllt. Der erste Federkörper 3 besteht aus einer Gummisorte geringer Dämpfung.

Die Kammern 4, 5, 6, 7 sind in axialer Richtung beiderseits durch geneigte Stirnwände begrenzt. Die flächenmäßige Ausdehnung der Stirnwände ist hierdurch im Vergleich zu bekannten Ausführungen relativ vergrößert und bedingt in Verbindung mit der geringen Dicke und der Verwendung eines weichelastischen Werkstoffes zu ihrer Herstellung eine leichte Ausbauchbarkeit. Akustisch wirksame, hochfrequente Schwingungen erfahren hierdurch in der erfindungsgemäßen Hülsengummifeder eine besonders gute Isolierung.

Im Bereich des Innenrohres 1 ist der erste Federkörper 3 mit in axialer Richtung beiderseits vorspringenden, zylindrischen Ansätzen versehen, welche die sachgerechte Positionierung der im Normalfalle nachträglich montierten Teilkörper 10.1 und 10.2 erleichtern. Diese bestehen aus gummielastischem Werkstoff hoher Dämpfung und sind durch unmittelbares Anvulkanisieren im Bereich ihres Innenumfanges mit metallischen Stützhülsen 9 verbunden. Die Stützhülsen 9 sind so dimensioniert, daß sich nach dem axialen Aufpressen auf das Innenrohr 1 ein unverrückbarer, fester Sitz auf demselben ergibt.

Die beiden Teilkörper 10. 1 und 10.2 des zweiten Federkörpers 10 sind von ovalem Umriß und so montiert, daß sich in dem dargestellten, unbelasteten Zustand eine unmittelbare Berührung des Außenrohres 2 nur im Bereich von zwei senkrecht übereinanderliegenden Berührungsstellen ergibt. In der quer zu dieser Richtung 12 liegenden Belastungsrichtung 13 ist demgegenüber ein radialer Abstand zwischen dem zweiten Federkörper 10 und dem Außenrohr 2 vorhanden. Die gezeigte Hülsengummifeder weist dementpsrechend in der Belastungsrichtung 12 eine große Steifigkeit auf, in der Belastungsrichtung 13 demgegenüber eine besonders große Nachgiebigkeit.

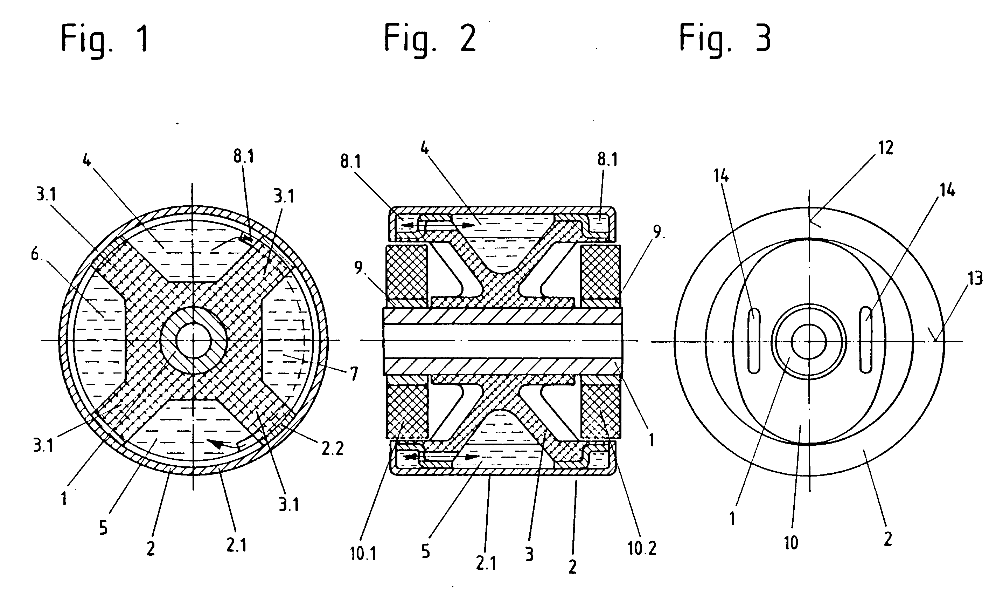

Der in Figur 3 gezeigte Umriß des zweiten Federkörpers 10 weist in der Belastungsrichtung 13 zusätzlich zu dem radialen Abstand von dem Außenrohr 2 zwei ihn ganz durchdringende, beiderseits neben dem Innenrohr liegende Durchbrechungen 14 auf, welche von ovaler Gestalt sind. Die Nachgiebigkeit des zweiten Federkörpers 10 in der Belastungsrichtung 13 wird hierdurch weiter vergrößert.

Es ist nicht unbedingt erforderlich, den zweiten Federkörper 10 in der in Figur 3 gezeigten Weise zu gestalten und zu montieren. Abweichende Anbringungsarten und gegebenenfalls die Verwendung einer kreisringförmig oder unsymmetrisch gestalteten Ausführung ist vielmehr je nach Anwendungsfall ohne weiteres denkbar. Auch lassen sich für die Herstellung des zweiten Federkörpers 10 Gummimischungen verwenden, die sich durch eine hochgradige, innere Dämpfung auszeichnen und die Entstehung großer Schwingungsausschläge in guter Weise unterdrücken.

## Patentansprüche

1. Hülsengummifeder mit hydraulischer Dämpfung, umfassend ein Innen- und ein Außenrohr (1, 2), die durch einen ersten Federkörper (3) aus Gummi radialelastisch aufeinander abgestützt sind, wobei der erste Federkörper (3) zumindest zwei einander gegenüberliegende, flüssigkeitsgefüllte Kammern (4, 5; 6, 7) aufweist, die durch eine Trennwand getrennt und paarweise durch eine Dämpfungsöffnung (8) verbunden sind, wobei parallel zu dem ersten Federkörper (3) ein zweiter Federkörper (10) vorgesehen ist, der in einem axialen Abstand von dem ersten Federkörper (3) in dem Spalt zwischen dem Innen- und dem Außenrohr (1, 2) angeordnet ist, dadurch gekennzeichnet, daß der zweite Federkörper (10) in zwei Radialebenen (12, 13), die einander senkrecht zugeordnet sind, verschieden nachgiebig gestaltet ist.

2. Hülsengummifeder nach Anspruch 1, dadurch gekennzeichnet, daß der zweite Federkörper (10) reibschlüssig mit dem Innen- und/oder Außenrohr (1, 2) verbunden ist.

3. Hülsengummifeder nach Anspruch 1 bis 2, dadurch gekennzeichnet, daß der zweite Federkörper (10) zwei Teilkörper (10.1, 10.2) umfaßt und daß die Teilkörper (10.1, 10.2) spiegelbildlich gestaltet und einander und dem ersten Federkörper (3) zugeordnet sind.

4. Hülsengummifeder nach Anspruch 1 bis 3, dadurch gekennzeichnet, daß der zweite Federkörper am Außenunfang einer metallischen Stützhülse (9) adhäsiv befestigt und durch die Stützhülse (9) mit dem Innenrohr (1) verbunden ist.

5. Hülsengummifeder nach einem der Ansprüche 1 bis 4, dadurch gekennzeichnet, daß der zweite Federkörper (10) aus einer Gummisorte besteht, die ein höheres Dämpfungsvermögen aufweist als die den ersten Federkörper (3) bildende Gummisorte.

## Claims

1. A rubber bushing with hydraulic damping, comprising an inner and an outer tube (1, 2) which are supported on each other with radial elasticity by a first spring body (3) made of rubber, the first spring body (3) having at least two chambers (4, 5; 6, 7) which are located opposite one another, are filled with fluid, are separated by a partition and are connected in pairs by a damping opening (8), a second spring body (10) being provided parallel to the first spring body (3), said second spring body being arranged in the gap between the inner and the outer tube (1, 2) with axial spacing from the first spring body (3), characterised in that the second spring body (10) is designed to be of different resilience in two radial planes (12, 13) which are in perpendicular association with each other.

2. A rubber bushing according to claim 1, characterised in that the second spring body (10) is frictionally connected to the inner and/or outer tube (1, 2).

3. A rubber bushing according to claim 1 or 2, characterised in that the second spring body (10) comprises two partial bodies (10.1, 10.2), and in that the partial bodies (10.1, 10.2) are of mirror-inverted design and are associated with each other and with the first spring body (3).

4. A rubber bushing according to any of claims 1 to 3, characterised in that the second spring body is adhesively attached to the outer circumference of a metallic support bush (9) and is connected by the support bush (9) to the inner tube (1).

5. A rubber bushing according to any of claims 1 to 4, characterised in that the second spring body (10) is composed of a type of rubber which has a higher damping capacity than the type of rubber forming the first spring body (3).

## Revendications

1. Ressort en caoutchouc à manchons avec amortissement hydraulique, comportant un tube intérieur et un tube extérieur (1, 2), qui sont soutenus radialement et élastiquement l'un contre l'autre au moyen d'un premier corps de ressort (3) en caoutchouc, le premier corps de ressort (3) comportant au moins deux chambres (4, 5 ; 6, 7), situées respectivement l'une en regard de l'autre, remplies de liquide et qui sont séparées par une paroi séparatrice et reliées par paires au moyen d'une ouverture d'amortissement (8), tandis qu'il est prévu parallèlement au premier corps de ressort (3) un second corps de ressort (10), qui est disposé, en étant espacé axialement du premier corps de ressort (3), dans l'intervalle existant entre le tube intérieur (1) et le tube extérieur (2), caractérisé en ce que le second corps de ressort (10) est agencé avec des élasticités différentes dans deux plans radiaux (12, 13) qui sont mutuellement perpendiculaires.

2. Ressort en caoutchouc à manchons selon la revendication 1, caractérisé en ce que le second corps de ressort (10) est relié par friction avec le tube intérieur (1) et/ou le tube extérieur (2).

3. Ressort en caoutchouc à manchons selon l'une des revendications 1 et 2, caractérisé en ce que le second corps de ressort (10) comporte deux parties (10.1, 10.2) et en ce que les parties de corps (10.1, 10.2) sont profilées symétriquement et sont associées l'une avec l'autre et avec le premier corps de ressort (3).

4. Ressort en caoutchouc à manchons selon l'une des revendications 1 à 3, caractérisé en ce que le second corps de ressort est fixé par adhésif sur le pourtour extérieur d'un fourreau métallique de soutien (9) et est relié au corps intérieur (1) par ce fourreau de soutien (9).

5. Ressort en caoutchouc à manchons selon l'une des revendications 1 à 4, caractérisé en ce que le second corps de ressort (10) se compose d'une qualité de caoutchouc qui a un pouvoir d'amortissement supérieur à celui de la qualité de caoutchouc formant le premier corps de ressort (3).
